# EUROPEAN PATENT APPLICATION

(11) **EP 3 239 264 A1**
(43) Date of publication of application: **01.11.2017**
(21) Application number: 15872543.2
(22) Date of filing: 16.11.2015
(51) Int. Cl.: C09K 3/14, F16D 69/02

(54) **FRICTION MATERIAL COMPOSITION, FRICTION MATERIAL USING SAME, AND FRICTION MEMBER**

(30) Priority: 24.12.2014 JP 2014260994
(71) Applicant: Japan Brake Industrial Co., Ltd., Hachioji-shi, Tokyo 192-0041 (JP)
(72) Inventor: UNNO, Mitsuo, Tokyo 100-6606 (JP)
(74) Representative: Eisenführ Speiser
(86) International application number: PCT/JP2015/082126
(87) International publication number: WO 2016/103974

(57) **Abstract**

The friction material composition has superior conductivity of a friction material, superior adherence of a coating during powder coating, superior film formation of coating and superior abrasion resistance without containing copper having serious environmental effects, the friction material composition includes a binder, an organic filler material, an inorganic filler material, and a fibrous substrate material, wherein the friction material composition contains 8 to 35 mass% of ferrosoferric oxide (Fe₃O₄).

## Description

### Technical Field

The present invention relates to friction material composition which is appropriate for friction material such as for disk braking pads used for braking of vehicles or the like, and relates to a friction material in which the friction material composition is used.

### Background Art

A disk braking pad has a structure which is formed by adhering a friction material onto a backing plate consisting of iron base metal. In a case in which no coating is applied onto the disk braking pad after adhering the friction material and the iron base material backing plate, it may rust when a water component makes contact in use. Therefore, the surfaces of the backing plate and friction material are generally coated. As a method for coating the disk braking pad, a powder coating method is known. In this method, a disk braking pad is electrically charged, a powder coating is electrically adhered on the surface thereof, and the disk braking pad on which the powder coating is electrically adhered is heated in a baking furnace so as to melt the powder coating and to form a coating film on the surface of the disk braking pad (for example, see Patent document 1 below).

Patent document 1: Japanese Unexamined Patent Application Publication No. 2003-166574

### Summary of the Invention

In recent years, there is a problem in that copper used in a friction material is dispersed as braking abrasion powder, and rivers, lakes and oceans are contaminated. Therefore, there is a tendency to limit use of copper, which is a cause of contamination, in the friction material. However, copper has higher conductivity among materials forming the friction material, and if use of this copper is limited, the amount of electrical charge on the disk braking pad may decrease during the powder coating process, and the amount of coating adhering electrostatically may also decrease. As a result, an amount of film formed by the electrostatic coating may decrease, and it may be difficult to obtain a coating film having superior corrosion resistance.

The present invention was completed in view of the above circumstances, and an object of the present invention is to provide a friction material composition in which conductivity of friction material is superior, adherence of coating during powder coating is superior, film formation of coating is superior and abrasion resistance is superior without containing copper having serious environmental effects.

The inventors have found that by containing appropriate amount of ferrosoferric oxide in a friction material composition, a friction material obtained therefrom has high conductivity, powder coating can be performed desirably, and abrasion resistance is superior even in a case in which the composition does not contain copper.

The friction material composition of the present invention based on the above knowledge includes a binder, an organic filler material, an inorganic filler material, and a fibrous substrate material, wherein the friction material composition does not contain copper as an element, or contains not more than 0.5 mass% of copper and 8 to 35 mass% of ferrosoferric oxide.

In the friction material composition of the present invention, it is desirable that the average particle diameter of the ferrosoferric oxide be 0.1 to 1.0 µm.

The friction material of the present invention is formed by forming the above friction material composition, and the friction member of the present invention is formed by the friction material formed by the above friction material composition and a backing metal.

According to the present invention, a friction material composition can be provided in which conductivity of friction material is superior, adherence of coating during powder coating is superior, film formation of coating is superior and abrasion resistance is superior without containing copper having serious environmental effects when used as a friction member such in a disk braking pad for vehicles.

### The Best Mode for Carrying Out the Invention

Hereinafter, the friction material composition and the friction material and the friction member using the same are explained in detail. It should be noted that the friction member composition of the present invention is a so-called nonasbestos friction material composition that does not contain asbestos.

### [Friction material composition]

The friction material composition in this embodiment contains no copper, or if copper is contained, contains not more than 0.5 mass% of copper. That is, copper and a copper alloy which are harmful to the environment are not substantially contained, and the content amount of copper as an element is not more than 0.5 mass%, desirably 0 mass%. As a result, even in a case in which abrasion powder is generated during braking, contamination will not occur in rivers, lakes, and oceans.

### (Ferrosoferric oxide)

The friction material composition of the present invention contains ferrosoferric oxide for 8 to 35 mass%. The ferrosoferric oxide is one of the oxides of iron shown by chemical formula Fe₃O₄, and it is found as a magnetite of mineral in nature. As a ferrosoferric oxide, commercially available ferrosoferric oxide can be used, which can be exemplified as one of which natural magnetite is finely ground, and one which is synthesized by finely grinding one of an iron baked in air, one of iron oxide (III) reduced by hydrogen containing water vapor, and one of water vapor contacted with red-hot iron. In a case in which the content amount of ferrosoferric oxide in the friction member composition is not less than 8 mass%, not only is film formation of coating during powder coating good, but abrasion resistance is also good. It is desirable that content amount of ferrosoferric oxide be not less than 20 mass%. On the other hand, in a case in which content amount of ferrosoferric oxide in the friction material composition is more than 35 mass%, formability of the friction material is deteriorated, and not only may it be difficult to produce a disk braking pad, but abrasion resistance may also be greatly deteriorated.

It is desirable that average diameter of the above ferrosoferric oxide be 0.1 to 1.0 µm. If the average diameter is within this range, conductivity can be imparted to the coating to a very high degree and adherence of the coating during powder coating is superior. That is, in a case in which the average diameter of ferrosoferric oxide is more than 1.0 µm, ferrosoferric oxide may exist locally in the friction material, and it may be difficult to impart conductivity to a surface of the friction material uniformly. On the other hand, in a case in which the average diameter of ferrosoferric oxide is less than 0.1 µm, fixing property to the friction member may be reduced, ferrosoferric oxide may fall off easily, and abrasion resistance may be reduced.

### (Binder)

The binder is used for unifying an organic filler, an inorganic filler, a fibrous substrate material and the like contained in the friction material composition together, and for imparting strength. The binder contained in the friction material composition of the present invention is not limited in particular, and a thermosetting resin which is usually used as a binder for friction material can be used.

As such a thermosetting resin, for example, phenol resin; elastomer dispersed phenol resin such as acryl elastomer dispersed phenol resin and silicone elastomer dispersed phenol resin; modified phenol resin such as acryl-modified phenol resin, silicone-modified phenol resin, cashew-modified phenol resin, epoxy-modified phenol resin and alkylbenzene-modified phenol resin and the like can be mentioned. These resins can be used alone or in combination of two kinds or more. In particular, phenol resin, acryl-modified phenol resin, silicone-modified phenol resin, alkylbenzene-modified phenol resin are desirable due to their superior heat resistance, formability and friction coefficient.

It is desirable that content amount of the binder in the friction material composition in the present invention be 5 to 20 mass%, and more desirably 5 to 10 mass%. In the case in which the content amount of the binder is 5 to 20 mass%, strength degradation of the friction material can be reduced. In addition, porosity of the friction material is reduced and sound and vibration properties such as squeaking noise due to increased elasticity coefficient can be reduced further.

### (Organic filler material)

The organic filler is added as a friction controlling agent for improving sound and vibration properties, abrasion resistance and the like of the friction material. The organic filler contained in the friction material composition of the present invention is not particularly limited as long as the filler exhibits the abovementioned properties. Cashew dust, rubber component or the like, which is commonly used as an organic filler, can be used.

The cashew dust which is obtained by hardening cashew nut shell oil and breaking the hardened oil and which is generally used as a friction material can be selected.

As the rubber component, for example, tire rubber, acryl rubber, isoprene rubber, NBR (nitrile-butadiene rubber), SBR (styrene-butadiene rubber), chlorinated butyl rubber, butyl rubber, silicone rubber or the like can be mentioned. These types of rubbers are used alone or in combination of two or more kinds.

It is desirable that content amount of the organic filler in the friction material composition in the present invention be 1 to 20 mass%, and more desirably 1 to 10 mass% and furthermore desirably 3 to 8 mass%. In the case in which the content amount of the organic filler is 1 to 20 mass%, increased elasticity coefficient of the friction material and sound and vibration properties degradation, such as squeaking, can be avoided. In addition, heat resistance degradation and strength degradation due to thermal history can be avoided.

### (Inorganic filler material)

The inorganic filler is added as a friction controlling agent for avoiding heat resistance degradation of the friction material and for improving abrasion resistance and friction coefficient. The inorganic filler contained in the friction material composition of the present invention is not limited in particular, as long as the filler is generally used as an inorganic filler for a friction material.

As the inorganic filler, for example, tin sulfide, molybdenum disulfide, bismuth sulfide, iron sulfide, antimony trisulfide, zinc sulfide, calcium hydroxide, calcium oxide, sodium carbonate, barium sulfate, coke, graphite, mica, vermiculite, calcium sulfate, talk, clay, zeolite, mullite, chromite, titanium oxide, magnesium oxide, silica, dolomite, calcium carbonate, magnesium carbonate, granular or tabular titanate, zirconium silicate, y alumina, manganese dioxide, zinc oxide, cerium oxide, zirconia or the like can be used. These may be used alone or in combination of two or more kinds. As the granular or tabular titanate, potassium 6-titanate, potassium 8-titanate, lithium potassium titanate, magnesium potassium titanate, sodium titanate or the like can be used alone or in combination of two or more kinds.

It is desirable that content amount of the inorganic filler in the friction material composition in the present invention be 30 to 80 mass%, and more desirably 40 to 70 mass% and furthermore desirably 50 to 60 mass%. In the case in which the content amount of the organic filler is 30 to 80 mass%, heat resistance degradation can be avoided, and balance of content amount of other components of the friction material may be desirable.

### (Fibrous substrate material)

The fibrous substrate material functions as a support in the friction material. In the friction material composition in the present invention, inorganic fiber, metallic fiber, organic fiber, carbon type fiber or the like which is usually used as a fibrous substrate material can be selected, and these may be used alone or in combination of two or more kinds.

As the inorganic fiber, ceramic fiber, biodegradable ceramic fiber, mineral fiber, glass fiber, silicate fiber or the like may be used alone or in combination of two or more kinds. Among these inorganic fibers, biodegradable mineral fiber containing SiO₂, Al₂O₃, CaO, MgO, FeO, Na₂O or the like in freely chosen combination is desirable, and as a commercially available product, Roxul series produced by LAPINUS FIBERS B.V or the like may be mentioned.

The metallic fiber is not limited in particular as long as it is usually used in a friction material, for example, fiber which contains metal or alloy of aluminum, iron, cast iron, zinc, tin, titanium, nickel, magnesium, silicon, copper, brass or the like as a main component can be used. In addition, these metals or alloys can be contained in fibrous form or powder form. However, it is desirable that copper and copper alloy not be contained from the viewpoint of harmful effects on the environment.

As the organic fiber, aramid fiber, cellulose fiber, acryl fiber, phenol resin fiber or the like may be used alone or in combination of two or more kinds.

As the carbon type fiber, flameproofed fiber, pitch type carbon fiber, PAN type carbon fiber, activated carbon fiber or the like may be used alone or in combination of two or more kinds.

It is desirable that content amount of the fibrous substrate material in the friction material composition in the present invention be 5 to 40 mass%, and more desirably 5 to 20 mass%, and furthermore desirably 5 to 15 mass%. In the case in which the content amount of the organic filler is 5 to 40 mass%, appropriate porosity as a friction material is obtained, squeaking is avoided, appropriate material strength is obtained, abrasion resistance is exhibited, and superior formability is obtained.

### [Friction material]

The friction material of the present embodiment can be produced by a generally known forming method using the friction material composition of the present invention, and desirably by a heating pressing forming method. In detail, for example, the friction material is produced by a following method in which the friction material composition of the present invention is uniformly mixed by using a mixing apparatus such as Loedige (trademark) mixer, pressing kneader or Eirich (trademark) mixer; the mixture is preliminary formed in a forming mold; the preliminarily formed material obtained is formed at a forming temperature of 130 to 160 °C, forming pressure of 20 to 50 MPa, and forming time of 2 to 10 minutes; and the formed material obtained is heat treated at 150 to 250 °C for 2 to 10 hours. Furthermore, if necessary, coating, scorch treatment or polishing treatment is performed.

### [Friction member]

The friction member of the present embodiment is made as the member having the friction material of the above present embodiment as a friction surface. As the friction member, for example, a following structure can be mentioned.
(1) A structure having only the friction material.
(2) A structure having a backing metal and the friction material formed by the friction material composition of the present invention arranged on the backing metal as a friction surface.
(3) A structure having a primer layer and an adhesive layer between the backing metal and the friction material in addition to the structure of (2), wherein the primer layer is for a purpose of surface modification of the backing metal for improving adhesive effect of the backing metal, and the adhesive layer is for a purpose of adhesion between the backing metal and the friction material.

The backing metal is usually used as a friction member to improve mechanical strength of the friction member. As material of the backing metal, metal or fiber reinforced plastic or the like, particularly iron, stainless steel, inorganic fiber reinforced plastic, carbon fiber reinforced plastic or the like may be mentioned. As the primer layer and the adhesive layer, one which is usually used in a friction member such as brake shoe may be selected.

Not only the friction material composition of the present embodiment can be formed to be used as an overlay material such as disk brake pad or brake lining of vehicles, but it can also be used as an underlay material of a friction member. It should be noted that the overlay material means a friction material corresponding to a friction surface of a friction member, and the underlay material means a layer which exists between a friction material corresponding to a friction surface of a friction member and a backing metal and which has a purpose for improving shear strength, crack resistance or the like around an adhesive portion of the friction material and the backing metal.

### Examples

Hereinafter the friction material composition, friction material and friction member of the present invention are further explained in detail by way of Examples and Comparative Examples; however, the present invention is not limited thereto.

### [Examples 1 to 4 and Comparative Examples 1 to 3]

### (Preparation of disk brake pad)

Each of the materials was added in an addition ratio shown in Table 1, friction material composition of Examples 1 to 4 and Comparative Examples 1 to 3 were obtained. The addition ratio in the Table is shown by mass%. Ferrosoferric oxide used in Examples and Comparative Examples were as follows.
Ferrosoferric oxide 1: trade name BP-302S, produced by TODA KOGYO CORP., average particle diameter 0.6 µm
Ferrosoferric oxide 2: trade name BP-306A, produced by TODA KOGYO CORP., average particle diameter 0.2 µm

This friction material composition was mixed by a Loedige mixer (trade name: Loedige mixer M20, produced by MATSUBO corporation), and the mixture obtained was preliminarily formed by a forming press (produced by Oji Machine Co., Ltd). The preliminarily formed material obtained was formed while being heated and pressed together with an iron backing metal (produced by Hitachi Automotive Systems, Ltd.) by a forming press (produce by SANKI SEIKO CO., LTD.) at a forming temperature of 140 to 160 °C, at a forming pressure of 30 MPa and for a forming time of 5 minutes. The formed product obtained was heat treated at 200 °C for 4.5 hours, and was polished by using a rotary polish apparatus to obtain disk brake pad of Examples 1 to 4 and Comparative Examples 1 to 3. It should be noted that in Examples and Comparative Examples, a disk brake pad in which thickness of the backing metal is 6 mm, thickness of the friction material is 11 mm, and projected area of the friction material is 52 cm² was prepared.

### (Evaluation of powder coating)

The disk brake pads of Examples 1 to 4 and Comparative Examples 1 to 3 prepared as explained above were powder coated by using an electrostatic powder coating apparatus (trade name: SFC-QTR100, produced by ASAHI SUNAC CORPORATION), and they were evaluated with respect to coating thickness of the backing plate (backing metal) and extent of powder coating at a side surface of the friction material as shown below. The coating thickness of the backing plate was measured by a dual type coating thickness measurer (trade name: LZ-200J, produced by Kett Electric Laboratory). With respect to the measurement results, a case in which the coating thickness of the backing plate was more than 20 µm was evaluated as "Good", a case in which the coating thickness was 10-20 µm was evaluated as "Satisfactory" and a case in which the coating thickness of the backing plate was less than 10 µm was evaluated as "Unsatisfactory" in Table 1. In addition, visual inspection was also performed, and at the side surface of the friction member, a case in which the friction material was coated by coating and the friction material was not visible was evaluated as "Satisfactory", and a case in which the friction material was exposed and the friction material was visible was evaluated as "Unsatisfactory" in Table 1.

### (Evaluation of abrasion resistance)

The abrasion resistance was measured based on JASO C427 of standard of Society of Automotive Engineers of Japan, Inc, and amount of abrasion of the friction material was evaluated in a case corresponding to 1000 times of braking under conditions of brake temperature 100 °C, vehicle velocity 50 km/h, and deceleration 0.3 G, as an abrasion resistance at low temperature. Evaluation was performed at inertia of 7 kgf·m·sec² using a dynamo meter. Furthermore, evaluation was performed using a ventilated disk rotor (material: FC190, produced by KIRIU CORPORATION) using a caliper of collet type of general pin slide type. The results are also shown in Table 1.

**Table 1**

| | | Examples | | | | Comparative Examples | | |
|---|---|---|---|---|---|---|---|---|
| | | 1 | 2 | 3 | 4 | 1 | 2 | 3 |
| Ferrosoferric oxide | Ferrosoferric oxide 1 | 10 | 20 | 30 | 0 | 0 | 40 | 0 |
| | Ferrosoferric oxide 2 | 0 | 0 | 0 | 20 | 0 | 0 | 0 |
| Inorganic filler | Potassium titanate (TXAX-MA, produced by KUBOTA corporation.) | 18 | 18 | 18 | 18 | 18 | 8 | 18 |
| | Barium sulfate | 15 | 5 | 0 | 5 | 25 | 0 | 15 |
| | Zirconia (BR-QZ, produced by DAIICHI KIGENSO KAGAKU KOGYO CO., LTD.) | 15 | 15 | 10 | 15 | 15 | 10 | 15 |
| | Mica | 5 | 5 | 5 | 5 | 5 | 5 | 5 |
| | Graphite (T150, produced by TIMCAL) | 5 | 5 | 5 | 5 | 5 | 5 | 5 |
| | Calcium hydroxide | 5 | 5 | 5 | 5 | 5 | 5 | 5 |
| Organic filler | Cashew dust | 4 | 4 | 4 | 4 | 4 | 4 | 4 |
| | Tire rubber powder | 5 | 5 | 5 | 5 | 5 | 5 | 5 |
| Binder | Phenol resin | 8 | 8 | 8 | 8 | 8 | 8 | 8 |
| Fibrous substrate material | Aramid fiber | 5 | 5 | 5 | 5 | 5 | 5 | 5 |
| | Mineral fiber | 5 | 5 | 5 | 5 | 5 | 5 | 5 |
| | Copper fiber | 0 | 0 | 0 | 0 | 0 | 0 | 10 |
| Evaluation of powder coating | Thickness of coating of backing plate | Satisfactory | Good | Good | Good | Unsatisfactory | Good | Good |
| | Side surface of friction material | Good | Good | Good | Good | Unsatisfactory | Good | Good |
| Abrasion resistance | Abrasion at 100 °C (mm) | 0.10 | 0.11 | 0.11 | 0.10 | 0.15 | 0.30 | 0.12 |

With respect to evaluation of powder coating, Examples 1 to 4 in which copper was not contained and ferrosoferric oxide was contained at 8 to 35 mass% were superior to Comparative Example 1 not containing copper and ferrosoferric oxide. With respect to evaluation of abrasion resistance, Examples 1 to 4 were superior to Comparative Example 2 containing more than 35 mass% of ferrosoferric oxide. From the results, it is obvious that Examples 1 to 4 have the same or superior performance on powder coatings and abrasion resistance than the friction material (Comparative Example 3) containing copper.

The friction material composition of the present invention is appropriate for a friction material and friction member of brake pad or the like for vehicles, since the friction material composition exhibits sufficient coating adherence during powder coating, good film formation of coating and superior abrasion resistance compared to a conventional product without containing copper, which has serious environmental effect.

## Claims

1. A friction material composition comprising:
a binder,
an organic filler material,
an inorganic filler material, and
a fibrous substrate material,
wherein the friction material composition contains no copper as an element, or contains not more than 0.5 mass% of copper and 8 to 35 mass% of ferrosoferric oxide.

2. The friction material composition according to claim 1, wherein average particle diameter of the ferrosoferric oxide is 0.1 to 1.0 µm.

3. A friction material which is formed by forming the friction material composition according to claim 1 or 2.

4. A friction member which is formed by the friction material formed by the friction material composition according to claim 1 or 2 and a backing metal.
